# EUROPEAN PATENT APPLICATION

(11) **EP 4 462 652 A1**
(43) Date of publication of application: **13.11.2024**
(21) Application number: 23172420.4
(22) Date of filing: 09.05.2023
(51) Int. Cl.: H02K 3/12, H02K 11/33, H02K 3/28, H02K 15/06

(54) **A STATOR FOR AN ELECTRIC MACHINE AND A CORRESPONDING METHOD OF ASSEMBLING, AN ELECTRICAL MACHINE INCLUDING SAID STATOR AND A METHOD OF OPERATING THEREOF**

(71) Applicant: Rolls-Royce Deutschland Ltd & Co KG, 15827 Blankenfelde-Mahlow (DE)
(72) Inventor: FURUHAUG, Roar, 7041 Trondheim (NO)

(57) **Abstract**

The present disclosure refers to a stator (10) and an electrical machine (100). The stator (10) stator core (12) defines a central axis (C) and includes a front side (14) and a back side (16) axially displaced from each other. A plurality of stator slots (19) is provided in the stator core (12) which surround a circumference (18) of the stator core (12) and extend from the front side (14) to the back side (16), wherein the plurality of stator slots (19) includes six different stator slot groups (S1, ..., S6) among the plurality of stator slots (19). The stator (10) further includes a plurality of wave winding coils (20) including: a first lane group (LG1) and a second lane group (LG2), wherein each lane group (LG1, LG2) includes three independent lanes (L1, L2, L3; L4, L5, L6), wherein the lanes (L1, L2, L3) of the first lane group (LG1) comprise wave winding coils of a first phase (1a, 1b, 1c), a third phase (3a, 3b, 3c) and a fifth phase (5a, 5b, 5c) and the lanes (L4, L5, L6) of the second lane group (LG2) each comprise wave winding coils of a second phase (2a, 2b, 2c), a fourth phase (4a, 4b, 4c) and a sixth phase (6a, 6b, 6c). The wave winding coils of each phase (1a, 1b, 1c) of each lane (L1, L2, L3; L4, L5, L6) include a corresponding connector (22). Further, each of the wave winding coils of the same phase (1a, 1b, 1c) of different lanes (L1, L2, L3) of one lane group (LG1; LG2) supported by the same slot group (S1) among the six stator slot groups (S1, ..., S6).

## Description

### Field of the Disclosure

The present disclosure relates to a stator for an electrical machine, an electrical machine including the stator and a method of operating the electrical machine. Further, the invention refers to a method of assembling the stator. In another aspect, the invention refers to an aircraft including the electrical machine.

### Technological Background

Electrical machines can generate a rotary motion of a rotor from a supplied electrical power or can generate electrical power using a supplied rotary motion depending on the mode of operation. The electrical machines include a stator and a rotor, wherein the rotor can rotate relative to the stator while the stator is immobilized.

When the electrical machine is operated as a motor, the stator receives an electrical power to generate a rotating magnetic field. In such case, the rotating magnetic field interacts with the rotor and causes the rotor to perform a rotating motion that is transferable to a mechanically coupled shaft to provide a rotation motion to a consumer based on the input electrical power. When the electrical machine is operated as a generator, a rotating motion of the rotor causes a voltage and/or a current which can be provided to an electric power consumer based on the input kinetic (rotation) energy.

The stator mechanically supports one or more coil windings which produce the rotating magnetic field or generate the electrical power depending on the mode of operation of the electrical machine.

In various applications, 3-phase electrical machines are used to provide a rotating magnetic field. However, in certain technical fields such as aircrafts 6-phase electrical machines have been developed and are used which can operate with a more stable and more homogeneous rotating field. A 6-phase electrical machine according to the state of the art may include two 3-phase lanes to provide the desired electromagnetic fields or to receive the electric power.

However, there exist requirements for even further developments to provide stators supporting even more lanes. A problem is however is to integrate such complex winding arrangement in a compact and space-efficient manner. Further, there is a problem of robustness to intrinsic electrical failure.

With more lanes involved, the complexity of the stator winding increases by orders of magnitude and new concepts need to be developed. Therefore, a difficulty is how to provide a systematic winding arrangement that can be used for operating as a 6-phase electrical machine while being integrated in a compact and space-efficient manner. Even further, it remains a challenge how to provide a persistent output if one of the windings coils or lanes cannot provide a current.

Additionally, even if a complex winding arrangement is provided, there remains the task of providing an assembly process that can be reproduced and be operated to fabricate the stator on suitable time scales and can be implemented by an efficient systematic.

The present invention provides a stator and an electrical machine including the stator which solves at least some of the above-mentioned problems. In addition, further technical problems are solved which becomes apparent from the following description.

### Summary of Invention

The invention is defined by the appended claims. The description that follows is subjected to this limitation. Any disclosure lying outside the scope of said claims is only intended for illustrative as well as comparative purposes.

According to one aspect of the present invention, a stator for an electrical machine is provided which includes stator core defining a central axis and including a front side and a back side axially displaced from each other. The stator includes a plurality of stator slots provided in the stator core which surround a circumference of the stator core and extend from the front side to the back side. The plurality of stator slots includes six different slot groups among the plurality of stator slots. Further, the stator includes a plurality of wave winding coils including a first lane group and a second lane group, wherein each lane group includes three independent lanes, wherein the lanes of the first lane group comprise wave winding coils of a first phase, a third phase and a fifth phase and the lanes of the second lane group each comprise wave winding coils of a second phase, a fourth phase and a sixth phase. The wave winding coils of each phase of each lane include a connector at the front side. The stator is further defined in that each of the wave winding coils of the same phase of one lane group are supported by the same stator slot group among the six stator slot groups.

According to one aspect of the present disclosure, an electrical machine is provided including the above stator.

According to yet another aspect of the invention, a method of operating the electrical machine is provided, wherein the method comprises the steps of operating the first lane group synchronically and operating the second lane group synchronically but shifted relative to the first lane group by a phase shift of 30 electrical degrees.

According to another aspect of the present disclosure, an aircraft is provided including the electrical machine.

Another aspect of the present disclosure refers to a method of assembling the stator.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a perspective view of a front side of a stator according to an embodiment of the invention,
- Fig. 2: illustrates a perspective view of back side of a stator according to an embodiment of the invention,
- Fig. 3: illustrates a perspective view of a one winding wave coil of the stator according to the embodiment of the invention,
- Fig. 4: illustrates a perspective view of winding wave coils of a first phases of one lane according to an embodiment,
- Fig. 5: illustrates a perspective view of winding wave coils of two lanes of different lane groups according to an embodiment,
- Fig. 6: illustrates a schematic of a method of operating the electrical machine,
- Fig. 7: illustrates a schematic of a method of assembling the stator, and
- Fig. 8: illustrates the method of assembling the stator according to a preferred embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto. In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a stator for an electrical machine is provided. The stator includes a stator core defining a central axis. The stator includes a front side and a back side axially displaced from each other. The stator includes a plurality of stator slots provided in the stator core which surround a circumference of the stator core and extend from the front side to the back side. The plurality of stator slots includes six different slot groups among the plurality of stator slots. A plurality of wave winding coils is wound along the circumference of the stator core and includes: a first lane group and a second lane group, wherein each lane group includes three independent lanes, wherein the lanes of the first lane group comprise wave winding coils of a first phase, a third phase and a fifth phase and the lanes of the second lane group each comprise wave winding coils of a second phase, a fourth phase and a sixth phase. The wave winding coils of each phase of each lane include a respective connector at the front side. Each of the wave winding coils of the same phase of different lanes of one lane group are supported by the same stator slot group among the six stator slot groups.

A lane refers to the known concept of three independent wave winding coils involving three phases. A lane group comprises three independent lanes. A wave winding coil of a phase includes a continuous, or uniform, conductor that is wound around the circumference of the stator core. The stator slots may be open towards the central axis or closed towards the central axis. Each wave winding coil may correspond to a magnetic pole in operation. The wave winding coils refer to flexible conductors which can be bend and/or twisted at the front side and/or the back side of the stator to allow windings to form a wave winding arrangement. At each side overhangs may be formed to provide the different turns. The overhangs may be referred to as windings. Each of the wave winding coils include insulation so that different wave winding coils are electrically insulated from one another even if overlayed on top of each other. The wave winding coils may each include multiple conductors in a Litz wire arrangement to increase electric current transport. A slot group includes six stator slot members. A front side may be referred to a first side and the back side may refer to a second side as front and back side may be exchanged.

The proposed stator includes only six stator slot groups among the plurality of stator slots for integrating an entirety of 6 different 3-phase lanes. Thus, only a minimum of 36 stator slots is required. The wave winding coils are arranged in systematic manner, where each slot member of a corresponding stator slot group supports the wave winding coils of the same phase of on lane group. This implies a compact and efficient wave winding arrangement in which only 36 stator slots of a stator core are needed to integrate six independent lanes as a result of sharing the same slot group including the stator slot members by the wave winding coils of the same phase thereby facilitating compact integration. Additional empty stator slots may be provided for redundancy. Such stator can be used to operate an electrical machine as a 6-phase electrical machine as described below. In addition, there is an increased reliability effect since wave winding coils of three lanes of the same phase are supported in one slot member of the same slot group. In case of intrinsic failure of one of the wave winding coils, the remaining wave winding coils of the other wave winding coils may still provide an electrical current which improves reliability and failure robustness. This is particularly important when applied in the field of aircrafts, but is also important in any other electrical machine operation.

In an embodiment, each wave winding coil is wound along the circumference of the stator core to include a forward and reverse turn such that slots of the respective stator slot group supports six winding turns of the wave winding coils of the same phase of the same lane group. Thus, in this manner, each slot includes in total six winding turns of one single phase of a lane group. As such, reliability and also operation stability is improved since each of the six winding turns can contribute with an electric current. Thereby, failure robustness is further improved since each winding turn approximately only contributes with a fraction of 1/6 to the entire current lead through one stator slot.

In an embodiment, the wave winding coils of the same phase of one lane group include a stacking order with six stacking positions in each stator slot member of the corresponding stator slot group, wherein a stacking position of each wave winding coil of the same phase is changed by one stacking position between two successive stator slot members along the circumference. The above implies that for each wave winding coil the stacking position is incremented from stator slot to stator slot within the same slot group by one stacking position until the sixth (highest) stacking position is reached. This feature has the technical effect of that the electrical path length of each of the wave winding coils is identical apart from tolerances since they undergo the same sequence of height changes along the circumference of the stator. This implies that the various lanes have the same electrical conductance and resistive properties thus preventing operational imbalance between the lanes of the wave winding coils. In addition, the feature allows that lanes of the three phases can be accessed from different circumferential positions of the stator core.

In an embodiment, a reverse and a forward turn of each wave winding coil of the same phase are directly on top of each other with respect to the stacking position within stator slot members of the corresponding stator slot group. This implies that in a stator slot the reverse and forward turn of the same winding coil are vertically directly on top of each other. This also results in an improved operational balance since the electrical path differences, e.g., with respect to the loop end, are reduced. Further, the feature eases manufacturing since the complexity of generating the winding turns at the front side or the back side of the stator requires a minimum of vertical changes in winding including multiple wave winding coils.

In an embodiment, the connectors of the wave winding coils of the same phase of one lane group are provided from a highest or a lowest stacking position of one stator slot member of the corresponding stator slot group. Thus, due to the incremental change of the stacking order, the lanes of the three phases can be accessed from different circumferential positions of the stator core and can be distributed by 120° over the entire circumference suitable of operating an electrical machine including the stator.

In an embodiment, the connectors of the wave winding coils of the same phase of one lane group are provided from each second stator slot member of the corresponding stator slot group. In this manner, the full circumference of 360° is used by each wave winding coil and a desired 120° geometrical difference suitable for operating along the circumference can be reached.

According to an embodiment, the wave winding coils of the first lane and the wave winding coils of the fourth lane form a first wave winding group, the wave winding coils of the second lane and wave winding coils of the fifth lane from a second wave winding group. The wave winding coils of the third lane and the wave winding coils of the sixth lane from a third wave winding group, wherein the wave winding coils of the same wave winding group are respectively supported, for each stacking position, in adjacent stator slots among the plurality of stator slots. The feature has the technical effect of that such stator can be obtained by a systematic and cooperative winding process in which the wave winding coils of the same winding group can be wound together in winding steps. Thus, the stator can be assembled in a fast and efficient manner despite of the complexity of having six different and independent lanes to be integrated in a stator core.

According to an embodiment, the connectors of the wave winding coils are grouped in connector pairs which are provided from adjacent stator slots among the plurality of stator slots and the connector pairs are separated from adjacent connector pairs by two stator slots along the circumferential direction. This can provide a configuration in which geometrical distance and proximity of connectors for the operation process is improved for operating.

According to an embodiment, a first connector pair includes the connector of the wave winding coil of the third phase of the first lane of the first lane group and the connector of the wave winding coil of the fourth phase of the fourth lane of the second lane group. A second connector pair includes the connector of the wave winding coil of the first phase of the first lane of the first lane group and the connector of the wave winding coil of the second phase of the fourth lane of the second lane group. A third connector pair includes the connector of the wave winding coil of the fifth phase of the first lane of the first lane group and the connector of the wave winding coil of the sixth phase of the fourth lane of the second lane group. A fourth connector pair includes the connector of the wave winding coil of the third phase of the second lane of the first lane group and the connector of the wave winding coil of the fourth phase of the fifth lane of the second lane group. A fifth connector pair includes the connector of the wave winding coil of the first phase of the second lane of the first lane group and the connector of the wave winding coil of the second phase of the fifth lane of the second lane group. A sixth connector pair includes the connector of the wave winding coil of the fifth phase of the second lane of the first lane group and the connector of the wave winding coil of the sixth phase of the fifth lane of the second lane group. A seventh connector pair includes the connector of the wave winding coil of the third phase of the third lane of the first lane group and the connector of the wave winding coil of the fourth phase of the sixth lane of the second lane group. An eighth connector pair includes the connector of the wave winding coil of the first phase of the third lane of the first lane group and the connector of the wave winding coil of the second phase of the sixth lane of the second lane group. A ninth connector pair includes the connector of the wave winding coil of the fifth phase of the third lane of the first lane group and the connector of the wave winding coil of the sixth phase of the sixth lane of the second lane group. The above connector configuration is useful for using the stator for a 6-phase electrical machine.

According to another aspect of the invention, an electric machine including the stator is provided. The electrical machine may include power electronics coupled to the connectors of the stator and configured to: operate the lanes of the first lane group synchronically and operate the lanes of the second lane group synchronically but shifted relative to the first lane group by a phase shift of 30 electrical degrees. In this manner, a 6-phase electrical machine is achieved. The power electronics may include a controller which can provide electrical power to the electrical machine to rotate a rotor. In particular embodiments, the power electronics may include a rectifier to convert a received electrical power from the electrical machine into constant electrical current.

According to another aspect of the invention, a method of operating an electrical machine is disclosed, wherein the method comprises the steps of providing an electric machine according to the above embodiments. The method comprises operating the first lane group synchronically, and operating the second lane group synchronically but shifted relative to the first lane group by a phase shift of 30 electrical degree. The same arguments apply to the operating method. In this manner, a 6-phase electrical machine is achieved by above operating.

According to another aspect of the invention, an aircraft comprising the electric machine is provided. An increased reliability effect and compact integration while providing high power can be reached when using the above electrical machine. Thus, the electrical machine is particularly suitable when applied in the field of aircrafts.

According to another aspect, a method of assembling the stator according to the above features is provided: The method comprises providing a stator core defining a central axis and including a front side and a back side axially displaced from each other. The stator core includes a plurality of stator slots provided in the stator core which surround a circumference of the stator core and extend from the front side to the back side. The plurality of stator slots refers to six different slot groups each including six stator slot members.

The method comprises providing a plurality of wave winding coils including a first lane group and a second lane group, wherein each lane group includes three independent lanes, wherein the lanes of the first lane group comprise wave winding coils of a first phase, a third phase and a fifth phase and the lanes of the second lane group each comprise wave winding coils of a second phase, a fourth phase and a sixth phase.

The method comprises a sequential winding process such that each of the wave winding coils of the same phase of one lane group are wound along the circumference of the stator core and supported together by stator slots of a corresponding stator slot group among the six stator slot groups, wherein each wave winding coil of each phase of each lane include a respective connector.

The same advantages as for the respective stator apply as well to the assembly method as described in more detail above. In addition, the same connector arrangement can be provided according to embodiments of the invention after the step of sequential winding and also the other features of the stator can be provided during the assembly process.

In a preferred embodiment, the sequential winding includes the following steps. The method includes supporting the wave winding coils of the first lane and the wave winding coils of the fourth lane in adjacent stator slots of the corresponding stator slot group which form a first wave winding group. Thus, these wave winding coils are wound together, i.e., simultaneously.

In a further step, the method includes generating a first primary winding at the front side to support each of the wave winding coils of the first wave winding group in the next stator slot member of each respective stator slot group in a circumference direction.

In a further step, the method includes supporting the wave winding coils of the second lane and the wave winding coils of the fifth lane in adjacent stator slots of the corresponding stator slot group which form a second wave winding group. Thus, these wave winding coils are wound together, i.e., simultaneously.

In a further step, the method includes generating a second primary winding at the front side to support each of the wave winding coils of the second wave winding group in the next stator slot member of each respective stator slot group in the circumference direction. The method includes supporting the wave winding coils of the third lane and the wave winding coils of the sixth lane in adjacent slots of the corresponding stator slot group in the circumference direction forming a third wave winding group. Thus, these wave winding coils are wound together, i.e., simultaneously.

In a further step, the method includes generating a third primary winding at the front side to support each of the wave winding coils of the third wave winding group in the next stator slot member of each respective stator slot group.

At this stage, the first (lowest) stacking position in each stator slot among the six stator slot groups is filled.

The method further includes generating a first secondary winding at the back side to support each of the wave winding coils of the first wave winding group in the second stacking position of the next stator slot member of each respective stator slot group to overlay the wave winding coils of the same wave winding group in a circumference direction. Thus, the reverse and forward turn are directly on top of each other.

In a further step, the method includes generating a second secondary winding at the back side to support each of the wave winding coils of the second wave winding group in the second stacking position of the next stator slot member of each respective stator slot group to overlay the wave winding coils of the same winding group in a circumference direction. Thus, the reverse and forward turn are directly on top of each other.

The method includes generating a third secondary winding at the back side to support each of the wave winding coils of the third wave winding group in the second stacking position of the next stator slot member of each respective stator slot group to overlay the wave winding coils of the same winding group in a circumference direction. Thus, the reverse and forward turn are directly on top of each other.

In a further step, the method includes generating a fourth secondary winding at the back side to support each of the wave winding coils of the third wave winding group obtained from the primary winding in the second stacking position of the next stator slot member slot of each respective stator slot group to overlay the wave winding coils of the first winding group in a circumference direction.

In a further step, the method includes generating a fifth secondary winding at the back side to support each of the wave winding coils of the first winding group obtained from the primary winding in the second stacking position of the next stator slot member of each respective stator slot group to overlay the wave winding coils of the second wave winding group in a circumference direction.

In a further step, the method includes generating a sixth secondary winding at the back side to support each of the wave winding coils of the second wave winding group obtained from the primary winding into the second stacking position of the next stator slot member of each respective stator slot group to overlay the wave winding coils of the third wave winding group in a circumference direction

At this stage, the second stacking position in each stator slot among the six stator slot groups is filled.

In further steps, the method includes repeating the winding process by generating six tertiary windings at the front side until a third stacking position in each stator slot among the six stator slot groups is filled. The winding process to be repeated refers to the same steps as performed to fill the second stacking position but performed on the front side.

In further steps, the method includes repeating the winding process by generating six quaternary windings at the back side until a fourth stacking position in each stator slot among the six stator slot groups is filled. The winding process to be repeated refers to the same steps as performed to fill the third stacking position but performed on the back side.

In further steps, the method includes repeating the process by generating six quinary windings at the front side until a fifth stacking position in each stator slot among the six stator slot groups is filled. The winding process to be repeated refers to the same steps as performed to fill the fourth stacking position but performed on the front side.

In further steps the method includes repeating the process by generating six senary windings at the back side until a sixth stacking position in each stator slot among the six stator slot groups is filled. The winding process to be repeated refers to the same steps as performed to fill the fourth stacking position but performed on the back side.

In an embodiment, the stator slots are open toward the central axis or open to the outside during the sequential winding and closed, in the latter case, by coupling a back yoke after the sequential winding is completed.

The method allows for a fast, since combining wave winding groups to be wound together, and systematic winding procedure to obtain the winding arrangement that can be used for operating a 6-phase electrical machine.

### Specific Embodiments

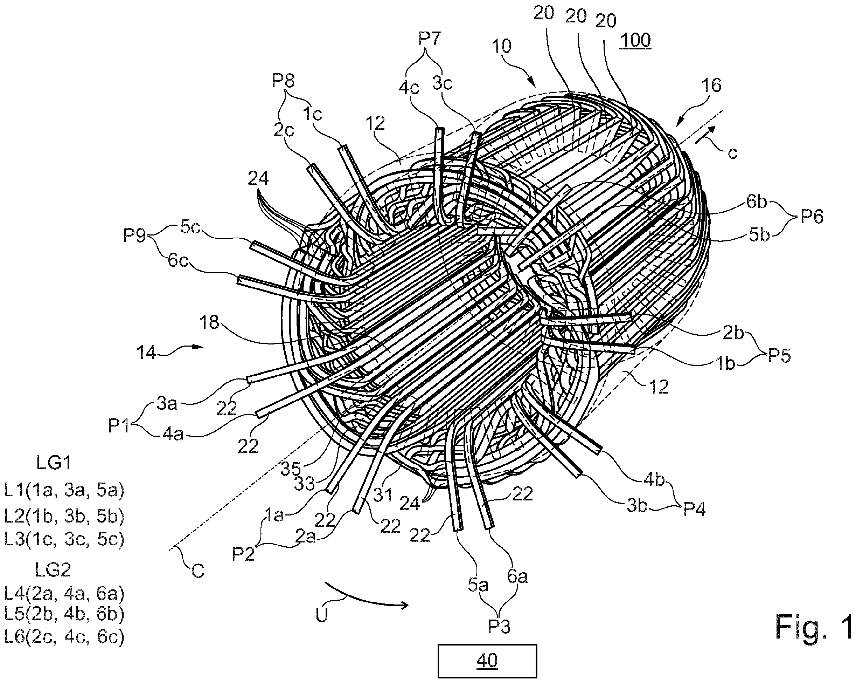

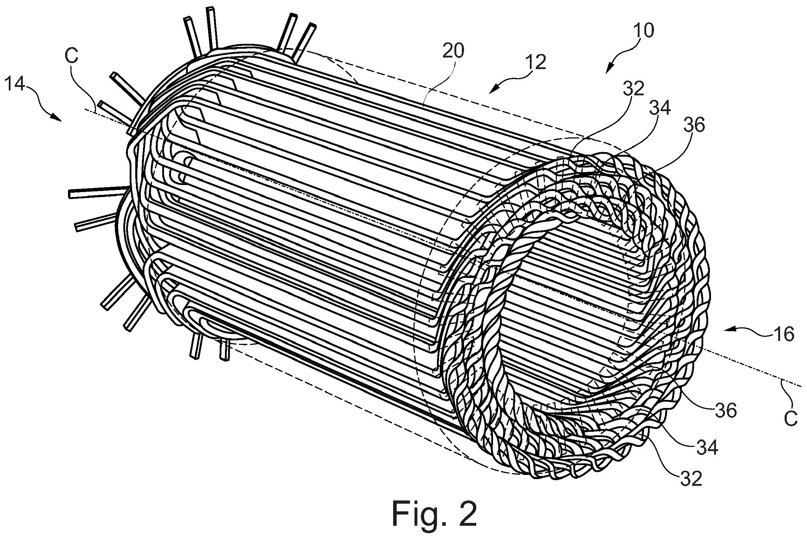

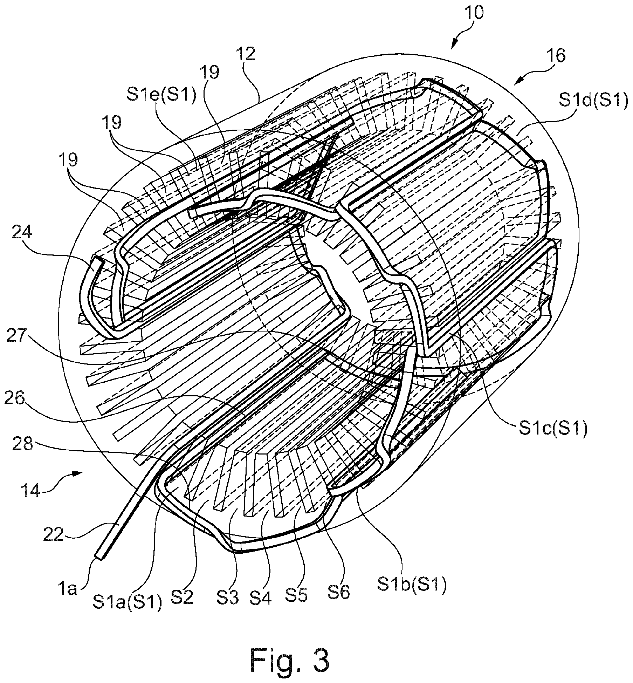

Fig. 1 illustrates a perspective view of a front side 14 of a stator 10 and an electrical machine 100 including the stator 10 according to an embodiment of the invention. Figure 2 illustrates a back side 16 of the stator 10. Figs. 3 to 5 illustrate a stator 10 according to preferred embodiments with only subsets of the wave winding coils 20 for illustrating preferred features of the winding arrangement of the wave winding coils 20. Figs. 1 to 5 will be described together in the following.

Figs. 1 to 5 illustrate the features of the stator 10. However, in the following, also features of the electrical machine 100 including the stator 10 are described for the sake of conciseness.

The stator 10 includes a stator core 12 which defines a central axis C. The stator core 12 geometrically forms a hollow tube so that a rotor, here not shown, is coaxially surrounded by the stator core 12 and can be rotated around the central axis C in operation. An air gap, here not shown, may be formed between the rotor and the stator core 12.

The stator 10 includes a front side 14 and a back side 16. The front side 14 and the back side 16 are axially displaced, that is axially distanced, from each other in axial direction c. Thus, the stator 10 extends in the axial direction c. The front side 14 of the stator 10 is for example shown in Fig. 1 and the back side 16 of the stator 10 can be seen in Fig. 2 according to embodiments of the invention.

The stator 10 includes a plurality of stator slots 19 which are provided in the stator core 12. The stator slots 19 are indicated more clearly in Fig. 3 and are left out in Figs. 1 and 2 merely for the sake of clarity. However, the stator slots 19 can also be anticipated in Figs. 1 and 2 due to the wave winding coils 20 extending in axial direction c through corresponding stator slots 19 as will be described below in more detail.

Referring to Fig. 3, the stator slots 19 surround a circumference 18 of the stator core 12 and each of the stator slots 19 extends from the front side 14 to the back side 16 in the axial direction c. In this embodiment, the stator slots 19 are open to towards the central axis C. However, in other embodiments, the stator slots 19 may be closed towards the central axis C.

Further, as indicated in Fig. 3, the plurality of stator slots 19 includes six different stator slot groups S1, ..., S6 among the plurality of stator slots 19. Each of the stator slot groups S1, ..., S6 include a different set of stator slot members S1a, ..., S1f. Thus, a stator slot member S1a, ..., S1f can only belong to one stator slot group S1. Six stator slot members S1a, ..., S1f are indicated in Fig. 3 for illustrating the first stator slot group S1 among the six stator slot groups S1, ..., S6. In total, the number of stator slots 19 only adds up to a number of 36 stator slots as required to implement the winding arrangement.

In more detail, the different stator slot groups S1, ..., S6 are arranged adjacent to each other along the circumference 18 of the stator core 12. For example, the first stator slot group S1 may include a first stator slot member S1a in a first stator slot and a second stator slot member S1b in a seventh stator slot in a circumferential direction U. In the same manner a thirteenth stator slot may refer to the second stator slot member S1c etc. The second stator slot group S2 may include a second stator slot, an eighth stator slot, a fourteenth stator slot etc. Thus, the arrangement may have a periodicity of six stator slots between stator slot members of the same stator slot group S1, ..., S6.

As shown in Fig. 1, the stator 10 includes an arrangement of a plurality of wave winding coils 20 which are arranged along the circumference 18 of the stator core 12. The wave winding coils 20 each correspond particular lane groups LG1, LG2 and are arranged in a desired manner as will be described in the following.

Each of the wave winding coils 20 correspond to a magnetic pole in operation. The wave winding coils 20 are flexible conductors which can be bend and/or twisted at the front side 14 and back side 16 of the stator 10 to provide windings allowing for a wave winding arrangement. Each of the wave winding coils 20 include electric insulation so that different wave winding coils 20 are electrically insulated from one another even if overlayed (directly) on top of each other. The wave winding coils 20 may each include multiple conductors in a Litz wire arrangement to optimize power transport.

As indicated in Figure 1, the plurality of wave winding coils 20 include a first lane group LG1 and a second lane group LG2, which are electrically independent from each other and can be operated differently.

Each of the lane groups LG1, LG2 include three independent lanes L1, L2, L3; L4, L5, L6. In particular, the first lane group LG1 includes a first lane L1, a second lane L2 and a third lane L3. The second lane group LG2 includes a fourth lane L4, a fifth lane L5 and a sixth lane L6. Thus, in total, 6 different and independent lanes are provided in the stator core 12.

In more detail, referring to the lanes L1, L2, L3 of the first lane group LG1, each of the lanes L1, L2, L3 comprise a wave winding coil of a first phase 1a, 1b, 1c, a third phase 3a, 3b, 3c and a fifth phase 5a, 5b, 5c. In particular, the first lane L1 comprises a wave winding coil of a first phase 1a, a wave winding coil of third phase 3a and a wave winding coil of fifth phase 5a, Thus, in Fig. 1, the first lane L1 refers to (1a, 3a, 5a). The second lane L2 comprises a wave winding coil of a first phase 1b, a wave winding coil of third phase 3b and a wave winding coil of a fifth phase 5b. Thus, in Fig. 1, the second lane L2 refers to (1b, 3b, 5b). The third lane L3 comprises a wave winding coil of a first phase 1c, a wave winding coil of third phase 3c and a wave winding coil of a fifth phase 5c. Thus, in Fig. 1, the third lane L3 refers to (1c, 3c, 5c). The association rule is also indicated directly in Fig. 1.

Similarly, lanes L4, L5, L6 of the second lane group LG2 each comprise wave winding coils of a second phase 2a, 2b, 2c, a fourth phase 4a, 4b, 4c and a sixth phase 6a, 6b, 6c. In particular, the fourth lane L4 comprises a wave winding coil of a second phase 2a, a wave winding coil of fourth phase 4a and a wave winding coil of a sixth phase 6a. Thus, in Fig. 1, the fourth lane L4 refers to (2a, 4a, 6a). The fifth lane L5 comprises a wave winding coil of a second phase 2b, a wave winding coil of a fourth phase 4b and a wave winding coil of a sixth phase 6b. Thus, in Fig. 1, the fifth lane L5 refers to (2b, 4b, 6b). The sixth lane L6 comprises a wave winding coil of a second phase 2c, a wave winding coil of a fourth phase 4c and a wave winding coil of sixth phase 6c. Thus, in Fig. 1, the sixth lane L6 refers to (2c, 4c, 6c).

Furthermore, referring to Figs. 1 and Figs. 3, each of the wave winding coils 20 include a first end 22 and a second end 24 and provide a continuous loop therebetween as indicated in Fig. 3. The first ends 22 can be configured as connectors as indicted in Fig. 1. The second ends 24 of the wave winding coils 20 may be connected to a neutral phase for star connection for operating the stator 10 in an electrical machine 100.

As indicated in Figure 1, the wave winding coils of each phase 1a, 1b, 1c of each lane L1, L2, L3; L4, L5, L6 include a respective connector 22 (first end). Thus, through the plurality of connectors 22, the two lane groups LG1, LG2 and each of the 6 lanes L1, L2, L3; L4, L5, L6 can be independently operated by power electronics 40.

The wave winding coils 20 of the above six lanes are arranged in a particular manner to provide a space-efficient stator 10. In particular, each of the wave winding coils of the same phase 1a, 1b, 1c of different lanes L1, L2, L3 of one lane group LG1 are supported by the same stator slot group S1 (S1a, ..., S1f) among the six stator slot groups S1, ..., S6.

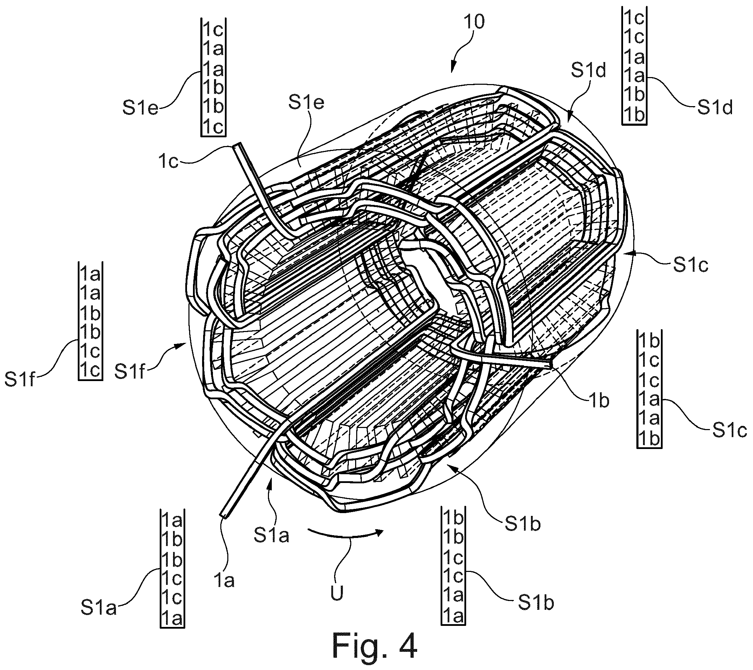

The features are illustrated in Fig. 4 in which only the subset of the wave winding coils 1a, 1b, 1c is shown for illustration. As can be seen, only the stator slot members S1a, ..., S1f of the first slot group S1 are used to provide the wave winding arrangement for these three wave winding coils 1a, 1b, 1c of the three lanes L1, L2 and L3.

Thus, only this one slot group S1 supports three different wave winding coils of three different lanes 1a, 2b, 1c of the one lane group LG1. Fig. 4 is only an example and the same applies to other wave winding coils of the same phase of different lanes of one lane group, that is for all other wave winding coils of the same phase 2a, 2b, 2c; 3a 3b, 3c; 4a, 4b, 4c; 5a, 5b, 5c; 6a, 6b, 6c. This arrangement is space-efficient given the total amount of 6 independent lanes so that only 36 stator slots 19 are needed for hosting the amount of 6 independent lanes. This configuration has the additional advantage that when a current flows through different lanes L1, L2, L3 winding coils of the same phase 1a, 1b, 1c of the first lane group LG1, in case of a failure, two wave winding coils can still provide current through the same slot group S1 and thus reduce the amount of operational imbalance in a failure case.

As indicated in more detail in Fig. 4, each wave winding coil 20 is wound along the circumference 18 of the stator core 12 in a forward manner and in a reverse manner. This is also indicated in Fig. 3 where the wave winding coil of the first phase 1a includes a loop end 26, where a forward turn 27 and a reverse turn 28 meet. It is therefore a further feature of the invention that each of the stator slots 19 of one stator slot group S1, ..., S6 supports in total six turns of the corresponding wave winding coils of the same phase 1a, 1b, 1c of the same lane group LG1. This can be seen in Fig. 4, where six turns, that is conductive portions, are stacked on top of each other in each stator slot member S1a, ..., S1f of the first stator slot group S1. As such, reliability and also operation stability is improved since each of the six winding turns can contribute with an electric current and failure robustness is improved.

Referring to Fig. 4, the wave winding structure is further defined in that the wave winding coils of the same phase 1a, 1b, 1c of one lane group LG1 include a stacking order with six stacking positions in each stator slot member S1a, ..., S1f of the corresponding stator slot group S1, ..., S6. This stacking order depends on the stator slot member S1a, ..., S1f of the corresponding stator slot group S1, ..., S6.

For example, the stacking order is indicated for the six stator slot members S1a, ... , S1f of the first stator slot group S1 in Fig. 4. As can be seen, the stacking order in each of the stator slot member S1a, ..., S1f of the same slot group S1 differs from the stacking order of the other stator slot members S1a, ..., S1f of the same slot group S1.

In particular, a stacking position of each wave winding coils of the same phase 1a, 1b, 1c changes, i.e. lifts, by one stacking position between two adjacent stator slot members S1a, ..., S1f of the same stator slot group S1 along a circumferential direction U. In particular, the stacking order may lift until the highest stacking position is reached. The same would apply to the other stator slot groups S1, ..., S6 in a similar manner. In other words, the stacking position of each of the wave winding coils 20 of the same phase 1a, 1b, 1c (and of all other phases) are systematically permutated along the circumference 18 in circumferential direction U.

Due to this feature of the wave winding arrangement, each of the wave winding coils 20 undergoes the same height profile along the wave winding resulting in the same electrical path length for each of the wave winding coils 20. This implies that apart from production tolerances the same electrical resistance and conductance properties for all wave winding coils in the complex wave winding arrangement are ensured preventing operational imbalance and improved operational stability. The feature can also be seen in the general Figure 1 for each wave winding coils of the same phase of the same lane group.

Figure 4 further illustrates that the reverse and the forward turn of each wave winding coil 20 of the same phase 1a, 1b, 1c is directly on top of each other with respect to the stacking position within slot group members of the corresponding stator slot group S1, ..., S6. This reduces the winding complexity in the assembly process.

As can be seen further in Figure 4, the connectors of the wave winding coils of the same phase 1a, 1b, 1c of one lane group LG1 are provided from each second stator slot member S1a, ..., S1f of the corresponding stator slot group S1, ..., S6. The connectors 22 of the wave winding coils of the same phase 1a, 1b, 1c of one lane group LG1 are provided from a highest stacking position of one stator slot of the corresponding stator slot group S1, ..., S6. Thus, a geometric 120° symmetry is achieved by the wave winding arrangement for the three lanes of one lane group.

As illustrated in Fig. 4, the connectors 22 of the wave winding coils of the same phase 1a, 1b, 1c of one lane group LG1 can be for example provided from the stator slot member S1a of the corresponding stator slot group S1, ..., S6 in which the forward and the revers turn meet, i.e., where the loop end 26 is provided. This is illustrated in Figure 4, where in the stator slot members S1a, S1c, S1e the connectors 22 are in the sixth (highest) stacking positions and the loop end 26 of the corresponding wave winding coil 1a, 1b, 1c is in the first (lowest) stacking position.

With the above winding arrangement, a symmetric and ordered configuration is provided that allows integrating the various wave winding coils of six independent lanes in a systematic manner. In particular, only six different stator slot groups (36 stator slots) are required to host the vast number of 6 independent lanes L1, ..., L6 in a systematic manner and having improved operational balance. In addition, the above structure can be produced in a systematic manner.

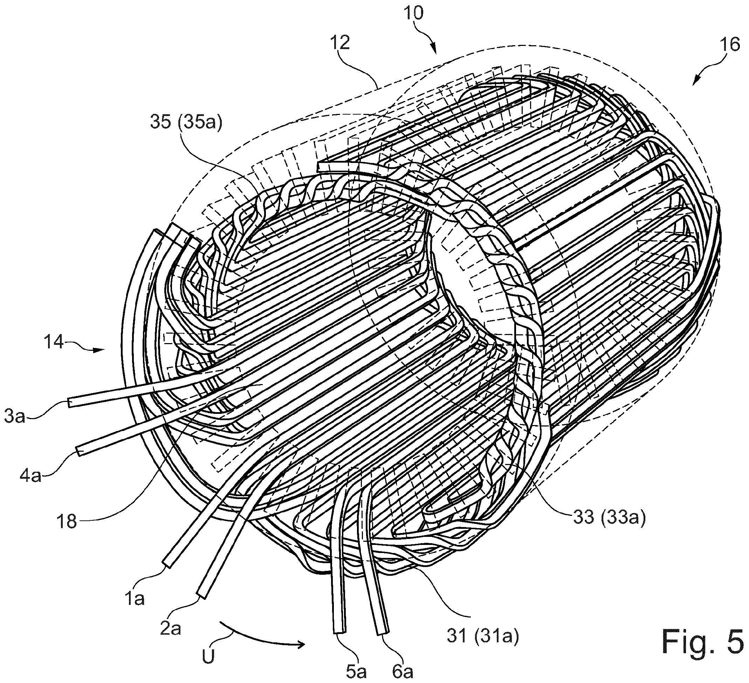

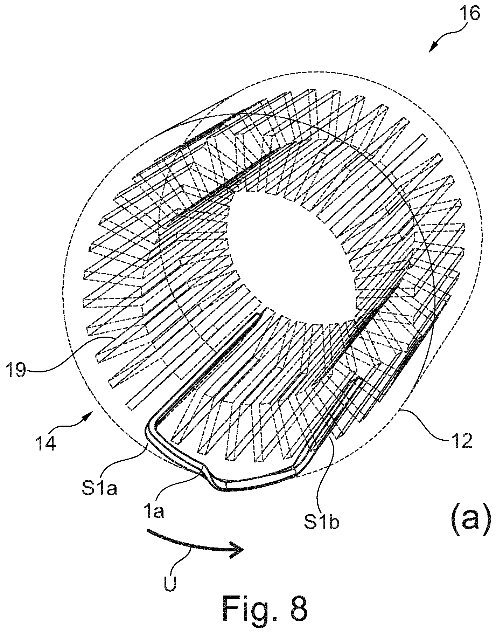

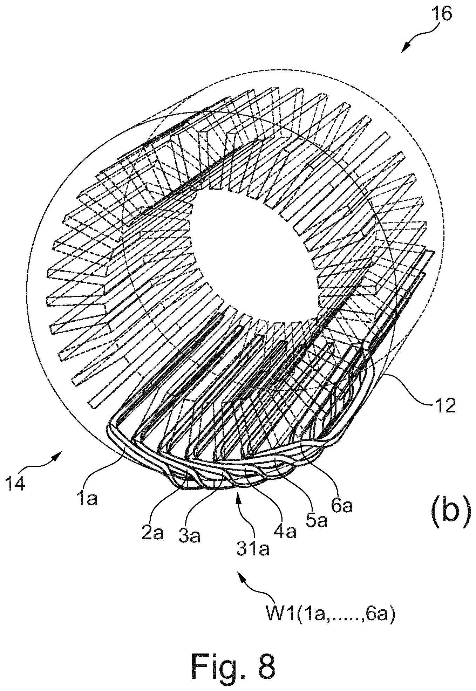

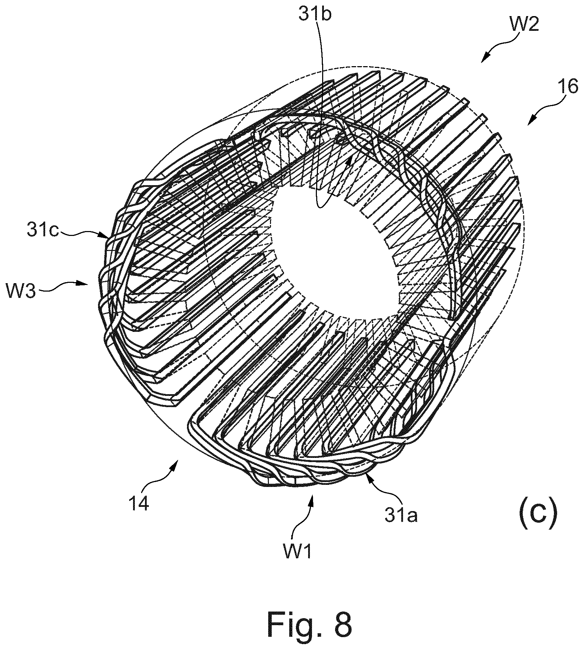

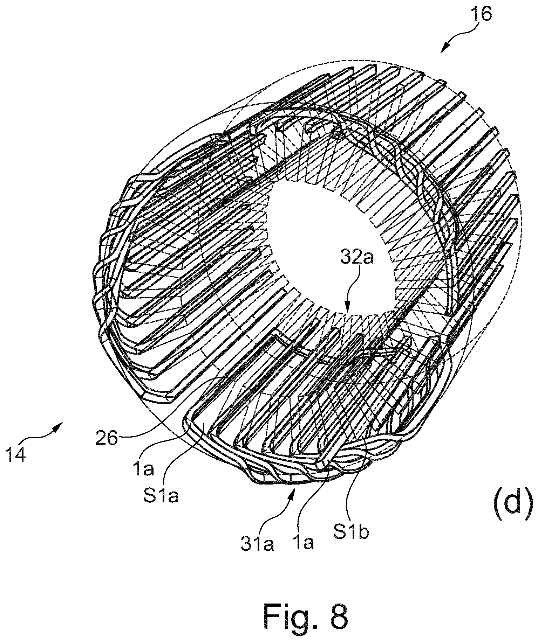

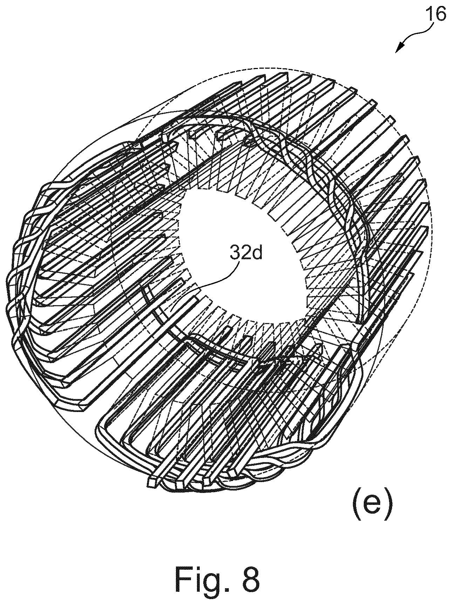

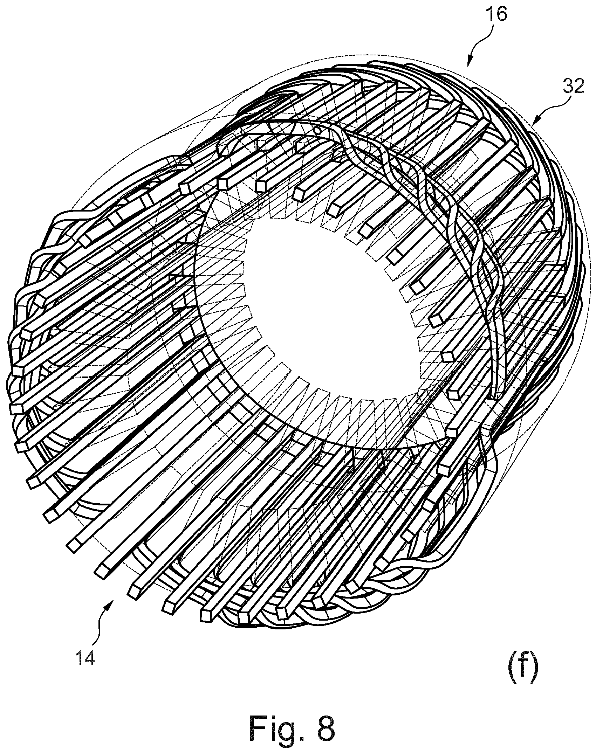

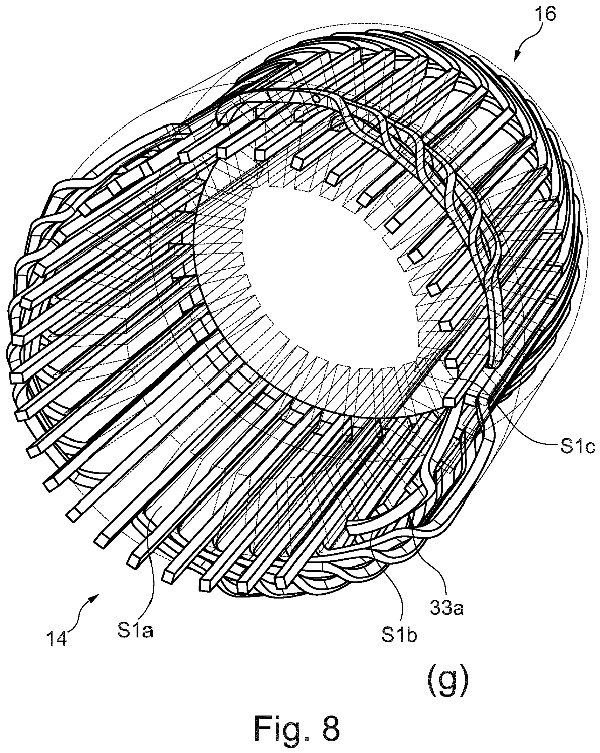

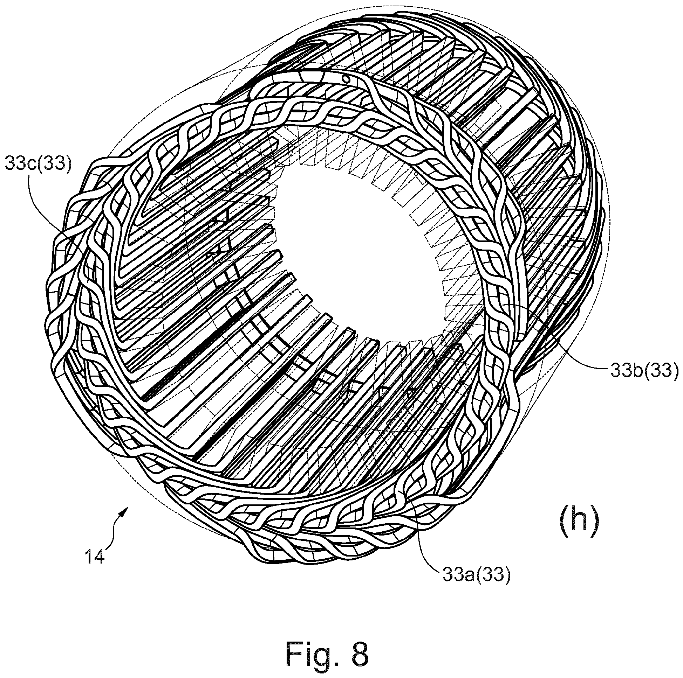

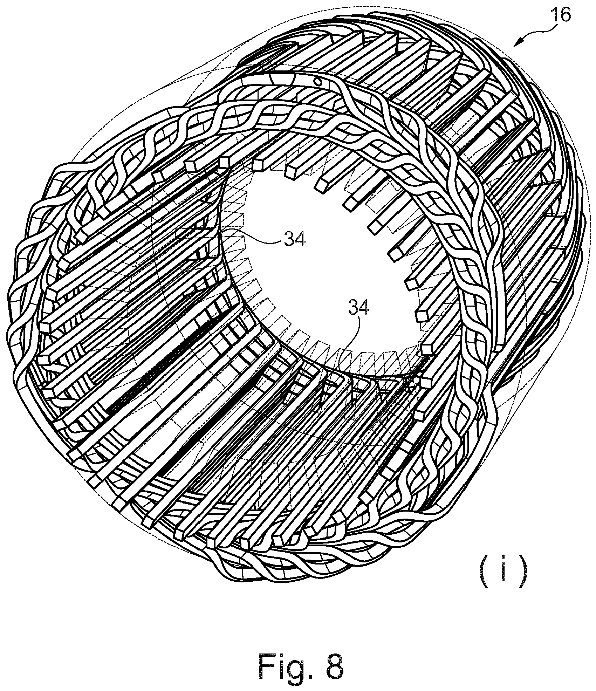

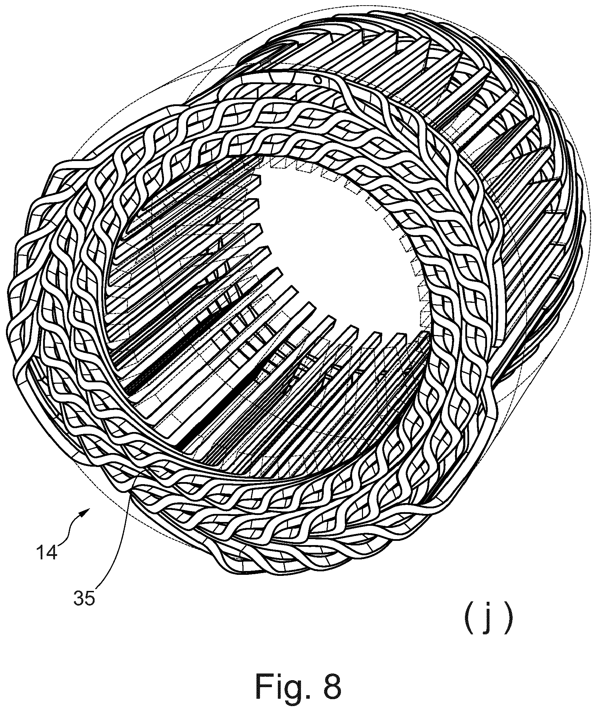

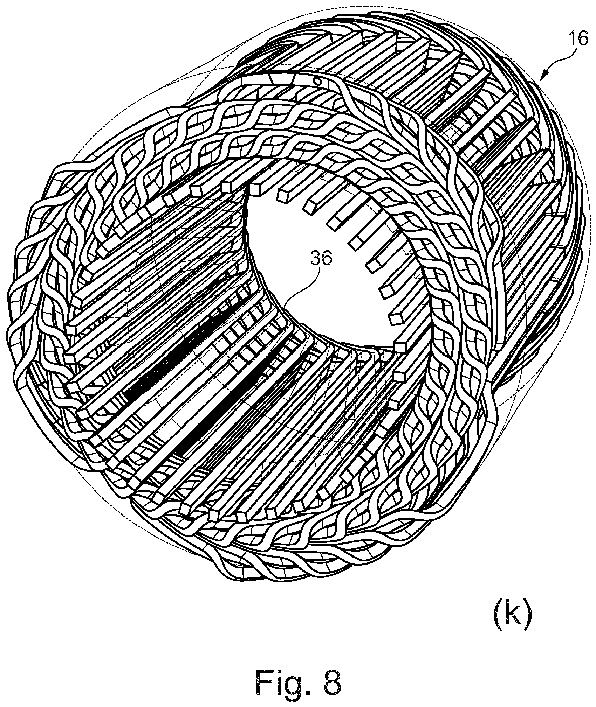

As illustrated in Figure 1 and Figure 5, the wave winding coils 1a, 3a, 5a of the first lane L1 and the wave winding coils 2a, 4a, 6a of the fourth lane L4 form a first wave winding group W1. In addition, the wave winding coils 1b, 3b, 5b of the second lane L2 and wave winding coils 2b, 4b, 6b of the fifth lane L5 form a second wave winding group W2. Further, the wave winding coils 1c, 3c, 5c of the third lane L3 and the wave winding coils 2c, 4a, 6a of the sixth lane L6 form a third wave winding group W3. The wave winding coils of the same wave winding group W1, W2, W3 may be respectively supported, with respect to each stacking position, in adjacent stator slots among the plurality of stator slots 19. This structure will become clear in the context of Fig. 8 and is also illustrated in Fig. 5.

In Figure 5, only the first wave winding group W1 is provided. A primary winding 31 at the front side 14 is provided by winding the first wave winding group W1 into the next stator slot members of the corresponding stator slot group into the first (lowest) stacking position in a circumferential direction U. In addition, a secondary winding 32 on the back side 16 (not visible here but indicated in Fig. 2 which shows the entire secondary winding 32 of all wave winding groups W1, W2, W3) is provided by winding the first wave winding group W1 into the next stator slot members of the corresponding stator slot group to overlay the wave winding coils of the same wave winding group W1 in the second stacking position in a circumferential direction U. Thus, forward and reverse turn of the same wave winding coil are directly in top of each other.

In addition, as can be seen, a tertiary winding 33 (33a) and a quinary winding 35 (35a) are provided. The tertiary winding 33 (33a) at the front side 14 is provided to support the wave winding coils in a third stacking position in a circumferential direction U. The quinary winding 33 (33a) is provided to support the wave winding coils in a fifth stacking position in a circumferential direction U. The quaternary winding 34 (34a) and the senary winding 36 (36a) support the wave winding coils of the first winding group W1 in the fourth and sixth stacking position which occur on the back side 16 and are not shown in the Figure 5. Thus, the above feature provides a systematic stepwise winding sequence in which each wave winding coil climbs one stacking position along the circumferential direction U. Thus, the above structure can be obtained in a systematic manner and fast manner since the winding can be performed collectively for the winding groups as illustrated for the first wave winding group W1 in Figure 5.

The connectors 22 can have a preferred connector configuration as described in the following. As shown in Figure 1, the connectors 22 (first end) of the wave winding coils 20 may be grouped in connector pairs P1, ..., P9 which are provided from adjacent stator slots among the plurality of stator slots 19. The connector pairs P1, ..., P9, as indicated in Fig. 1, are separated from adjacent connector pairs P1, ..., P9 by two stator slots along the circumferential direction U. From the stator slots between the connector pairs the wave winding coils 20 may be connected to a neutral phase 24 (second end) as illustrated in Figures 1, 4 and 5.

The connector configuration, when considered along the circumferential direction U, may include the following connector pairs P1, ..., P9 as illustrated in Figure 1. A first connector pair P1 includes the connector of the wave winding coil of the third phase 3a of the first lane L1 of the first lane group LG1 and the connector of the wave winding coil of the fourth phase 4a of the fourth lane L4 of the second lane group LG2. A second connector pair P2 includes the connector of the wave winding coil of the first phase 1a of the first lane L1 of the first lane group LG1 and the connector of the wave winding coil of the second phase 2a of the fourth lane L4 of the second lane group LG2. A third connector pair P3 includes the connector of the wave winding coil of the fifth phase 5a of the first lane L1 of the first lane group LG1 and the connector of the wave winding coil of the sixth phase 6a of the fourth lane L4 of the second lane group LG2. A fourth connector pair P4 includes the connector of the wave winding coil of the third phase 3b of the second lane L2 of the first lane group LG1 and the connector of the wave winding coil of the fourth phase 4b of the fifth lane L5 of the second lane group LG2. A fifth connector pair P5 includes the connector of the wave winding coil of the first phase 1b of the second lane L2 of the first lane group LG1 and the connector of the wave winding coil of the second phase 2b of the fifth lane L5 of the second lane group LG2. The sixth connector pair P6 includes the connector of the wave winding coil of the fifth phase 5b of the second lane L2 of the first lane group LG1 and the connector of the wave winding coil of the sixth phase 6b of the fifth lane L5 of the second lane group LG2. A seventh connector pair P7 includes the connector of the wave winding coil of the third phase 3c of the third lane L3 of the first lane group LG1 and the connector of the wave winding coil of the fourth phase 4c of the sixth lane L6 of the second lane group LG2. An eighth connector pair P8 includes the connector of the wave winding coil of the first phase 1c of the third lane L3 of the first lane group LG1 and the connector of the wave winding coil of the second phase 2c of the sixth lane of the second lane group LG2. A ninth connector pair P9 includes the connector wave winding coil of the fifth phase 5c of the third lane L3 of the first lane group LG1 and the connector of the wave winding coil of the sixth phase 6c of the sixth lane L6 of the second lane group LG2. This can provide a configuration in which geometrical distance and proximity of connectors 22 for the operation process.

With the above-described stator 10 also an electrical machine 100 is defined that includes the stator 10 according to the various embodiments as described above. The electrical machine 100 may include power electronics 40 that is connected to the plurality of connectors 22. The power electronics 40 may be configured to operate the first lane group LG1 synchronically, and operate the second lane group LG2 synchronically but shifted relative to the first lane group LG1 by a phase shift of 30 electrical degree. In this manner, a 6-phase electrical machine can be operated, either as motor or as generator.

Such an electrical machine 100 inherits the benefits of the above-described stator 10. In particular, the such electrical machine has improved reliability and a compact integration given the complexity of hosting six independent lanes L1, L2, L3, L4, L5, L6. In particular, an aircraft comprising the electric machine 100 is provided that can use the electrical machine 100 preferably as a generator to provide electrical power (or as well as motor).

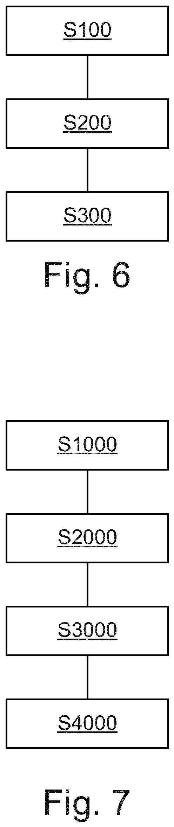

Fig. 6 illustrates a schematic of a method of operating the electrical machine 100. The method includes providing S100 an electric machine 100 according to one of the above embodiments.

The method includes operating S200 the first lane group LG1 synchronically. Synchronically means here that each of the lanes L1, L2, L3 of the first lane group LG are operated synchronically. In addition, the method includes operating the second lane group LG2, i.e., the lanes L4, L5, L6 synchronically but shifted relative to the first lane group LG1 by a phase shift of 30 electrical degree. In this manner, a geometrical 6-phase electrical machine can be operated, either as motor or as generator.

Fig. 7 illustrates a schematic of a method of assembling the electrical machine 100. The method comprises the steps of providing S1000 a stator core 12 defining a central axis C and including a front side 14 and a back side 16 axially displaced from each other. A plurality of stator slots 19 is provided in the stator core 12 which surround a circumference 18 of the stator core 12 and extend from the front side 14 to the back side 16. The plurality of stator slots 19 includes six different slot groups S1, ..., S6 among the plurality of stator slots 19. For further details, it is referred to the above description.

The method includes providing S2000 a plurality of wave winding coils 20. The plurality of wave winding coils 20 include a first lane group LG1 and a second lane group LG2, wherein each lane group LG1, LG2 includes three independent lanes L1, L2, L3; L4, L5, L6. The lanes L1, L2, L3 of the first lane group LG1 comprise wave winding coils of a first phase 1a, 1b, 1c, a third phase 3a, 3b, 3c and a fifth phase 5a, 5b, 5c. The lanes L4, L5, L6 of the second lane group LG2 each comprise wave winding coils of a second phase 2a, 2b, 2c, a fourth phase 4a, 4b, 4c and a sixth phase 6a, 6b, 6c.

The method includes a sequential stacking S3000 of the plurality of wave winding coils 20 such that each of the wave winding coils of the same phase 1a, 1b, 1c of one lane group LG1; LG2 are wound along the circumference 18 of the stator core 12 and being supported by the same stator slot group S1 among the six stator slot groups S1, ..., S6.

In a further step, respective connectors 22 of the wave winding coils of each phase of each lane L1, L2, L3; L4, L5, L6 are provided S4000 at the front side 14 of the stator core 12. The method of providing the connectors 22 can be performed as illustrated in Fig. 1 and as described above.

In Figure 8, a sequential winding S3000 according to a preferred embodiment is disclosed. Throughout the Figures, the recent method step is indicated in bold black.

As illustrated in Figures 8 (a) and 8 (b), the method includes supporting the wave winding coils 1a, 3a, 5a of the first lane L1 and the wave winding coils 2a, 4a, 6a of the fourth lane L4 in adjacent stator slots 19 of the corresponding stator slot group S1, ..., S6. In detail, for mere illustration as demonstrated in Figure 8 (a), the first winding coil of a first phase 1a is supported in the stator slot member S1a of the first stator slot group S1. In here, the wave winding coils 1a, 3a, 5a of the first lane L1 and the wave winding coils 2a, 4a, 6a of the fourth lane L4 form a first wave winding group W1 as indicated in Fig. 8 (b).

As shown in Figure 8 (a) and 8 (b), the method involves generating a first primary winding 31a at the front side 14 to support each of the wave winding coils of the first wave winding group W1 in the next stator slot member of each respective stator slot group S1, ... S6 in a circumference direction U.

In the illustrative case of Figure 8 (a), the first winding coil of the first phase 1a of the first lane L1 as illustrative example is wound at the front side 14 into the stator slot member S1b only for illustrating the winding step for a single wave winding coil of the first phase 1a as performed for the entire group in Fig. 8 (b).

As illustrated in Fig. 8 (c), the above steps are repeated for the additional wave winding coils to fill the first (lowest) stacking position in each stator slot of the six stator slot groups of the stator core 12. No overlaying of winding coils is provided at that stage. That is, the second stacking position is entirely empty.

In detail, the method includes supporting the wave winding coils 1b, 3b, 5b of the second lane L2 and the wave winding coils 2b, 4b, 6b of the fifth lane L5 in adjacent stator slots 19 of the corresponding stator slot group S1, ..., S6 which form a second wave winding group W2. The supporting is performed in adjacent but yet unfilled stator slots. That is, the supporting is performed in the first (lowest) stacking position of stator slots next to the stator slots occupied in the lowest stacking position by the first wave winding group W1 in a circumferential direction U as indicated in Fig. 8 (c).

The method includes generating a second primary winding 31b at the front side 14 to support each of the wave winding coils of the second wave winding group W2 in the next stator slot member of each respective stator slot group S1, ..., S6 in the circumference direction U.

Further, the method includes supporting the wave winding coils 1c, 3c, 5c of the third lane L3 and the wave winding coils 2c, 4a, 6a of the sixth lane L6 in adjacent slots of the corresponding stator slot group in the circumference direction U forming a third wave winding group W3. The supporting is performed in adjacent but yet unfilled stator slots, i.e., in the first (lowest) stacking position. That is, the supporting is performed in the first (lowest) stacking position of stator slots next to the stator slots occupied in the lowest stacking position by the second wave winding group W2 in a circumferential direction U as indicated in Fig. 8 (c).

In addition, the method includes generating a third primary winding 31c at the front side 14 to support each of the wave winding coils of the third wave winding group W3 in the next stator slot member of each respective stator slot group S1, ..., S6.

After completing these steps, the first stacking position in each stator slot among the six stator slot groups S1, ..., S6 is filled by the wave winding coils 20 as illustrated in Fig. 8 (c).

As illustrated in Fig. 8 (d) loop ends 26 are formed and the second stacking position in the second slot member S2b for the first winding coil of the first phase 1a of the first lane L1 is provided. In the example of Fig. 8 (d), this is performed for the wave winding coil 1a of the first lane L1. However, this is performed for the entire first wave winding group W1.

That is, the method includes generating a first secondary winding 32a at the back side 16 to support each of the wave winding coils of the first winding group W1 in the second stacking position of the next stator slot member of each respective stator slot group S1, ..., S6 to overlay the wave winding coils of the same winding group W1 in a circumference direction U.

In a similar manner, end loops are also performed for the other winding groups W2 and W3 as will be repeated below.

That is, the method includes generating a second secondary winding 32b at the back side 16 to support each of the wave winding coils of the second wave winding group W2 in the second stacking position of the next stator slot member of each respective stator slot group S1, ..., S6 to overlay the wave winding coils of the same winding group W2 in the circumference direction U.

Further, the method comprises generating a third secondary winding 32c at the back side 16 to support each of the wave winding coils of the third wave winding group W3 in the second stacking position of the next stator slot member of each respective stator slot group S1, ..., S6 to overlay the wave winding coils of the same winding group W3 in the circumference direction U.

In addition, as illustrated in Fig. 8 (e), the wave winding coils of the third wave winding group W3 are overlayed with the wave winding coils of the first winding group W1 as indicated for a coil subset as shown in Fig. 8 (e).

In detail, the method comprises generating a fourth secondary winding 32d at the back side 16 to support each of the wave winding coils of the third wave winding group W3 obtained from the primary winding in the second stacking position of the next stator slot member slot of each respective stator slot group S1, ..., S6 to overlay the wave winding coils of the first winding group W2, occupying the first stacking position, in a circumference direction U to be supported in the second stacking position.

This winding operation is also performed for the first winding group W1 and the second wave winding group W2.

That is, as illustrated in Fig. 8 (f), the method includes generating a fifth secondary winding 32e at the back side 16 to support each of the wave winding coils of the first winding group W1 obtained from the primary winding into the second stacking position of the next stator slot member of each respective stator slot group S1, ..., S6 to overlay the wave winding coils of the second wave winding group W2, occupying the first stacking position, in a circumference direction U to be supported in the second stacking position.

The method may include generating a sixth secondary winding 32f at the back side 16 to support each of the wave winding coils of the second wave winding group W2 obtained from the primary winding in the second stacking position of the next stator slot member of each respective stator slot group to overlay the wave winding coils of the third wave winding group W2, occupying the first stacking position, in a circumference direction U to be supported in the second stacking position.

Thus, in this manner, the second stacking position of the stator slots of all stator slot groups are entirely filled as illustrated in Fig. 8 (f).

The above-described steps performed between the filling the first and second stacking position are now repeated multiple times.

In detail, the method includes the steps of generating six tertiary windings 33 at the front side 14 until a third stacking position in each slot among the six stator slot groups S1, ..., S6 is filled as illustrated in Fig. 8 (g) and (h). Figure 8 (g) illustrates this step for the winding coil of the first phase 1a which is wound to be supported in the third stacking position of the third stator slot member S1c of the first stator slot group S1 for illustration.

Similarly, the method includes the step of generating six quaternary windings 34 at the back side 16 until a fourth stacking position in each stator slot among the six stator slot groups S1, ... , S6 is filled, as shown in Fig. 8 (i).

The method further includes the steps of generating six quinary windings 35 at the front side 14 until a fifth stacking position in each stator slot among the six stator slot groups S1, ..., S6 is filled, as shown in Figure 8 (j).

Then, the method includes the steps of generating six senary windings 36 at the front side 16 until a sixth stacking position in each stator slot among the six stator slot groups S1, ..., S6 is filled, as shown in Figure 8 (k).

Although in the present example the stator slots 19 are open toward the central axis C, in other examples, the stator slots may be open to the outside during the sequential winding and closed by coupling a back yoke (here not shown) after the sequential winding is completed.

In the above manner, a systematic assembly process is provided to reach a stator 10 having a compact winding arrangement including six independent lanes L1, L2, L3; L4, L5, L6. The method is fast and systematic as it involves collective winding of winding groups. Thus, the complex winding arrangement of the stator 10 can be obtained by applying an efficient and systematic winding and stacking. Thus, a stator 10 including six independent lanes is provided which allows compact and space-efficient integration and further provides reliable output which can be manufactured in an efficient way. Further advantages are mentioned in the above description or follow implicitly from the above disclosure.

### Reference signs

- 100: electrical machine

- 10: stator
- 12: stator core
- 14: front side (first side)
- 16: back side (second side)
- 18: circumference
- 19: stator slot

- 20: wave winding coil
- 22: connector (first end)
- 24: neutral phase (second end)
- 26: loop end
- 27: forward turn
- 28: reverse turn

- 31: primary winding
- 31a, ..., 31c: first/second/third primary winding

- 32: secondary winding
- 32a, ..., 32f: first/second/third/fourth/sixth secondary winding

- 33: tertiary winding
- 34: quaternary winding
- 35: quinary winding
- 36: senary winding

- 40: power electronics

- S1, ..., S6: stator slot groups
- S1a, ..., S1f: stator slot member (of first stator slot group S1)
- LG1: first lane group
- L1: first lane
- L2: second lane
- L3: third lane

- LG2: second lane group
- L4: fourth lane
- L5: fifth lane
- L6: sixth lane

- 1a, 1b, 1c: wave winding coils of first phase
- 2a, 2b, 2c: wave winding coils of second phase
- 3a, 3b, 3c: wave winding coils of third phase
- 4a, 4b, 4c: wave winding coils of fourth phase
- 5a, 5b, 5c: wave winding coils of fifth phase
- 6a, 6b, 6c: wave winding coils of sixth phase

- W1: first wave winding group
- W2: second wave winding group
- W3: third wave winding group

- c: axial direction
- C: central axis
- U: circumferential direction

- S100: providing the electrical machine
- S200: operating the lanes of the first lane group
- S300: operating the lanes of the second lane group

- S1000: providing a stator core
- S2000: providing a plurality of wave winding coils
- S3000: sequential winding
- S4000: providing connectors
- P1: first connector pair
- P2: second connector pair
- P3: third connector pair
- P4: fourth connector pair
- P5: fifth connector pair
- P6: sixth connector pair
- P7: seventh connector pair
- P8: eighth connector pair
- P9: ninth connector pair

## Claims

1. A stator (10) for an electrical machine (100), comprising:
a stator core (12) defining a central axis (C) and including a front side (14) and a back side (16) axially displaced from each other;
a plurality of stator slots (19) provided in the stator core (12) which surround a circumference (18) of the stator core (12) and extend from the front side (14) to the back side (16), wherein the plurality of stator slots (19) includes six different stator slot groups (S1, ..., S6) among the plurality of stator slots (19);
a plurality of wave winding coils (20) wound along the circumference (18) of the stator core (12), including:
a first lane group (LG1) and a second lane group (LG2), wherein each lane group (LG1, LG2) includes three independent lanes (L1, L2, L3; L4, L5, L6), wherein the lanes (L1, L2, L3) of the first lane group (LG1) comprise wave winding coils of a first phase (1a, 1b, 1c), a third phase (3a, 3b, 3c) and a fifth phase (5a, 5b, 5c) and the lanes (L4, L5, L6) of the second lane group (LG2) each comprise wave winding coils of a second phase (2a, 2b, 2c), a fourth phase (4a, 4b, 4c) and a sixth phase (6a, 6b, 6c);
wherein the wave winding coils of each phase of each lane (L1, L2, L3; L4, L5, L6) include a respective connector (22) at the front side (14); and
wherein each of the wave winding coils of the same phase (1a, 1b, 1c) of different lanes (L1, L2, L3) of one lane group (LG1) are supported by the same stator slot group (S1) among the six stator slot groups (S1, ..., S6).

2. The stator (10) of claim 1, wherein each wave winding coil (20) is wound along the circumference (18) of the stator core (12) to include a forward and a reverse turn such that stator slot members (S1a, ..., S1f) of the stator slot group (S1, ..., S6) each support six winding turns of the wave winding coils of the same phase (1a, 1b, 1c) of the same lane group (LG1).

3. The stator (10) according to claim 2, wherein the wave winding coils of the same phase (1a, 1b, 1c) of one lane group (LG1; LG2) include a stacking order with six stacking positions in each stator slot member (S1a, ..., S1f) of the corresponding stator slot group (S1, ..., S6), wherein a stacking position of each wave winding coil of the same phase (1a, 1b, 1c) is changed by one stacking position between two successive stator slot members (S1a, ..., S1f) of the corresponding stator slot group (S1, ..., S6) along the circumference (18).

4. The stator (10) of claim 3, wherein a reverse and a forward turn of each wave winding coil (20) of the same phase (1a, 1b, 1c) are directly on top of each other with respect to the stacking position within stator slot members (S1a, ..., S1f) of the corresponding stator slot group (S1, ..., S6).

5. The stator (10) of one of the claims 3 to 4, wherein the connectors (22) of the wave winding coils of the same phase (1a, 1b, 1c) of one lane group (LG1; LG2) are provided from each second stator slot member (S1a, ..., S1f) of the corresponding stator slot group (S1, ..., S6).

6. The stator (10) of one of the claims 3 to 5, wherein the connectors (22) of the wave winding coils of the same phase (1a, 1b, 1c) of one lane group (LG1; LG2) are provided from a highest or a lowest stacking position of one stator slot of the corresponding stator slot group (S1, ..., S6).

7. The stator (10) of one of the claims 1 to 6, wherein:
the wave winding coils (1a, 3a, 5a) of the first lane (L1) and the wave winding coils (2a, 4a, 6a) of the fourth lane (L4) form a first wave winding group (W1),
the wave winding coils (1b, 3b, 5b) of the second lane (L2) and wave winding coils (2b, 4b, 6b) of the fifth lane (L5) form a second wave winding group (W2),
the wave winding coils (1c, 3c, 5c) of the third lane (L3) and the wave winding coils (2c, 4c, 6c) of the sixth lane (L6) form a third wave winding group (W3),
wherein the wave winding coils of the same wave winding group (W1, W2, W3) are respectively supported, for each stacking position, in adjacent stator slots among the plurality of stator slots (19).

8. The stator (10) of one of the claims 1 to 7, wherein the connectors (22) of the wave winding coils (20) are grouped in connector pairs (P1, ..., P9) which are provided from adjacent slots among the plurality of slots (19) and the connector pairs (P1, ..., P9) are separated from adjacent connector pairs (P1, ..., P9) by two stator slots along the circumferential direction (U), wherein:
a first connector pair (P1) includes the connector of the wave winding coil of the third phase (3a) of the first lane (L1) of the first lane group (LG1) and the connector of the wave winding coil of the fourth phase (4a) of the fourth lane (L4) of the second lane group (LG2),
a second connector pair (P2) includes the connector of the wave winding coil of the first phase (1a) of the first lane (L1) of the first lane group (LG1) and the connector of the wave winding coil of the second phase (2a) of the fourth lane (L4) of the second lane group (LG2), and
a third connector pair (P3) includes the connector of the wave winding coil of the fifth phase (5a) of the first lane (L1) of the first lane group (LG1) and the connector of the wave winding coil of the sixth phase (6a) of the fourth lane (L4) of the second lane group (LG2);
a fourth connector pair (P4) includes the connector of the wave winding coil of the third phase (3b) of the second lane (L2) of the first lane group (LG1) and the connector of the wave winding coil of the fourth phase (4b) of the fifth lane (L5) of the second lane group (LG2),
a fifth connector pair (P5) includes the connector of the wave winding coil of the first phase (1b) of the second lane (L2) of the first lane group (LG1) and the connector of the wave winding coil of the second phase (2b) of the fifth lane (L5) of the second lane group (LG2), and
a sixth connector pair (P6) includes the connector of the wave winding coil of the fifth phase (5b) of the second lane (L2) of the first lane group (LG1) and the connector of the wave winding coil of the sixth phase (6b) of the fifth lane (L5) of the second lane group (LG2);
a seventh connector pair (P7) includes the connector of the wave winding coil of the third phase (3c) of the third lane (L3) of the first lane group (LG1) and the connector of the wave winding coil of the fourth phase (4c) of the sixth lane (L6) of the second lane group (LG2),
an eighth connector pair (P8) includes the connector of the wave winding coil of the first phase (1c) of the third lane (L3) of the first lane group (LG1) and the connector of the wave winding coil of the second phase (2c) of the sixth lane of the second lane group (LG2), and
a ninth connector pair (P9) includes the connector of the wave winding coil of the fifth phase (5c) of the third lane (L3) of the first lane group (LG1) and the connector of the wave winding coil of the sixth phase (6c) of the sixth lane (L6) of the second lane group (LG2).

9. An electrical machine (100) including a stator (10) according to one of the claims 1 to 8.

10. The electrical machine (100) of claim 9, further including power electronics (40) coupled to the connectors (22) and configured to:
operate the lanes (L1, L2, L3) of the first lane group (LG1) synchronically, and
operate the lanes (L4, L5, L6) of the second lane group (LG2) synchronically but shifted relative to the lanes (L1, L2, L3) of the first lane group (LG1) by a phase shift of 30 electrical degree.

11. A method of operating an electrical machine (100), wherein the method comprises the steps of:
a) providing (S100) an electric machine (100) according to claim 9,
b) operating (S200) the lanes (L1, L2, L3) of the first lane group (LG1) synchronically, and
c) operating (S300) the lanes (L4, L5, L6) of the second lane group (LG2) synchronically but shifted relative to the lanes (L1, L2, L3) of the first lane group (LG1) by a phase shift of 30 electrical degree.

12. An aircraft comprising the electric machine (100) according to any one of the preceding claims 9 to 10.

13. A method of assembling a stator (10) according to claim 1, the method comprising the steps of:
providing (S1000) a stator core (12) defining a central axis (C) and including a front side (14) and a back side (16) axially displaced from each other, wherein the stator core (12) includes a plurality of stator slots (19) provided in the stator core (12) which surround a circumference (18) of the stator core (12) and extend from the front side (14) to the back side (16), wherein the plurality of stator slots (19) includes six different slot groups (S1, ..., S6) among the plurality of stator slots (19);
providing (S2000) a plurality of wave winding coils (20) including:
a first lane group (LG1) and a second lane group (LG2), wherein each lane group (LG1, LG2) includes three independent lanes (L1, L2, L3; L4, L5, L6), wherein the lanes (L1, L2, L3) of the first lane group (LG1) comprise wave winding coils of a first phase (1a, 1b, 1c), a third phase (3a, 3b, 3c) and a fifth phase (5a, 5b, 5c) and the lanes (L4, L5,
L6) of the second lane group (LG2) each comprise wave winding coils of a second phase (2a, 2b, 2c), a fourth phase (4a, 4b, 4c) and a sixth phase (6a, 6b, 6c),
sequentially winding (S3000) the plurality of wave winding coils (20) such that each of the wave winding coils of the same phase (1a, 1b, 1c) of one lane group (LG1; LG2) are wound along the circumference (18) of the stator core (12) to be supported by the same stator slot group (S1) among the six stator slot groups (S1, ..., S6);
providing (S4000) respective connectors (22) of the wave winding coils of each phase of each lane (L1, L2, L3; L4, L5, L6) at the front side (14).

14. The method of claim 13, wherein the sequential winding (S3000) includes:
supporting the wave winding coils (1a, 3a, 5a) of the first lane (L1) and the wave winding coils (2a, 4a, 6a) of the fourth lane (L4) in adjacent stator slots (19) of the corresponding stator slot group (S1, ..., S6) which form a first wave winding group (W1);
generating a first primary winding (31a) at the front side (14) to support each of the wave winding coils of the first wave winding group (W1) in the next stator slot member of each respective stator slot group (S1, ... S6) in a circumference direction (U);
supporting the wave winding coils (1b, 3b, 5b) of the second lane (L2) and the wave winding coils (2b, 4b, 6b) of the fifth lane (L5) in adjacent stator slots (19) of the corresponding stator slot group (S1, ..., S6) which form a second wave winding group (W2),
generating a second primary winding (31b) at the front side (14) to support each of the wave winding coils of the second wave winding group (W2) in the next stator slot member of each respective stator slot group (S1, ... S6) in the circumference direction (U);
supporting the wave winding coils (1c, 3c, 5c) of the third lane (L3) and the wave winding coils (2c, 4a, 6a) of the sixth lane (L6) in adjacent slots of the corresponding stator slot group in the circumference direction (U) forming a third wave winding group (W3),
generating a third primary winding (31c) at the front side (14) to support each of the wave winding coils of the third wave winding group (W3) in the next stator slot member of each respective stator slot group (S1, ... S6) so that the first stacking position in each stator slot among the six stator slot groups (S1, ..., S6) is filled;
generating a first secondary winding (32a) at the back side (16) to support each of the wave winding coils of the first winding group (W1) in the second stacking position of the next stator slot member of each respective stator slot group (S1, ... S6) to overlay the wave winding coils of the same winding group (W1) in a circumference direction (U);
generating a second secondary winding (32b) at the back side (16) to support each of the wave winding coils of the second wave winding group (W2) in the second stacking position of the next stator slot member of each respective stator slot group (S1, ..., S6) to overlay the wave winding coils of the same winding group (W2) in a circumference direction (U);
generating a third secondary winding (32c) at the back side (16) to support each of the wave winding coils of the third wave winding group (W3) in the second stacking position of the next stator slot member of each respective stator slot group (S1, ..., S6) to overlay the wave winding coils of the same winding group (W3) in a circumference direction (U);
generating a fourth secondary winding (32d) at the back side (16) to support each of the wave winding coils of the third wave winding group (W3) obtained from the primary winding in the second stacking position of the next stator slot member slot of each respective stator slot group (S1, ... S6) to overlay the wave winding coils of the first winding group (W1) in a circumference direction (U);
generating a fifth secondary winding (32e) at the back side (16) to support each of the wave winding coils of the first winding group (W1) obtained from the primary winding into the second stacking position of the next stator slot member of each respective stator slot group (S1, ... S6) to overlay the wave winding coils of the second wave winding group (W2) in a circumference direction (U);
generating a sixth secondary winding (32f) at the back side (16) to support each of the wave winding coils of the second wave winding group (W2) obtained from the primary winding into the second stacking position of the next stator slot member of each respective stator slot group (S1, ... S6) to overlay the wave winding coils of the third wave winding group (W3) in a circumference direction (U) so that the second stacking position in each stator slot among the six stator slot groups (S1, ..., S6) is filled;
repeating the process by generating six tertiary windings (33) at the front side (14) until a third stacking position in each stator slot among the six stator slot groups (S1, ..., S6) is filled;
repeating the process by generating six quaternary windings (34) at the back side (16) until a fourth stacking position in each stator slot among the six stator slot groups (S1, ..., S6) is filled;
repeating the process by generating six quinary windings (35) at the front side (14) until a fifth stacking position in each stator slot among the six stator slot groups (S1, ..., S6) is filled; and
repeating the process by generating six senary windings (36) at the back side (16) until a sixth stacking position in each stator slot among the six stator slot groups (S1, ..., S6) is filled.

15. The method of claim 14, wherein the stator slots (19) are open toward the central axis (C) or open to the outside during the sequential winding (S3000) and closed by coupling a back yoke after the sequential winding (S3000) is completed.
